# EUROPÄISCHE PATENTSCHRIFT

(11) **EP 1 775 819 B1**
(45) Veröffentlichungstag und Bekanntmachung des Hinweises auf die Patenterteilung: **11.08.2010**
(21) Anmeldenummer: 06019835.5
(22) Anmeldetag: 22.09.2006
(51) Int. Cl.: H02J 3/38, H02J 3/24

(54) **Verfahren zum Betreiben einer Windenenergieanlage**
Method of operating a wind energy plant
Procédé de commande d'une centrale éolienne

(30) Priorität: 15.10.2005 DE 102005049426
(43) Veröffentlichungstag der Anmeldung: 18.04.2007
(73) Patentinhaber: NORDEX Energy GmbH, 22848 Norderstedt (DE)
(72) Erfinder: Schubert, Thomas, 25479 Ellerau (DE); Voss, Eberhard, Dr., 18233 Jörnstorf (DE)
(74) Vertreter: Hauck Patent- und Rechtsanwälte

(56) Entgegenhaltungen:
- EP-A- 1 371 846
- EP-A- 1 467 463
- US-A- 5 886 417

## Beschreibung

Die vorliegende Erfindung betrifft ein Verfahren zum Betreiben einer Windenergieanlage. Windenergieanlagen besitzen einen Generator, der je nach Typ der Windenergieanlage eine andere Bauweise aufweisen kann. Die von dem Generator erzeugte elektrische Leistung wird für die einzelne Windenergieanlage oder für in einem Windpark zusammengefaßte Windenergieanlagen in das elektrische Netz eingespeist.

Es ist bekannt, daß bei einer plötzlichen Trennung großer Verbraucher vom Netz durch die weiterhin in das Netz eingespeiste Leistung unerwünschte Überlastungen des Netzes und der Kraftwerke auftreten können. In ungünstigen Fällen kommt es aufgrund dieser Überlastung zur Trennung der Kraftwerke vom Netz und damit zu einem Ausfall der gesamten Versorgung in dem betroffenen Gebiet. Solche in der Regel mehrstündigen Ausfälle sind in der Vergangenheit bereits aufgetreten, beispielsweise anläßlich des plötzlichen Ausfalls einer Übertragungsleitung. Je nach Aufbau des Netzes kann zwischen dem Auftreten der Ursache und dem Ausfall der gesamten Versorgung durch das Abtrennen der Kraftwerke von dem Netz eine Zeit von einigen Minuten vergehen. Bis zum vollständigen Ausfall der Netze ist in dem Netz ein Anstieg der Netzspannung und der Netzfrequenz feststellbar.

Aus dem Stand der Technik sind verschiedene Möglichkeiten zur Netzstabilisierung bekannt. Aus DE 100 22 974 C2 ist eine Windenergieanlage bekannt, die ihre Leistungsabgabe verringert, sobald die Netzfrequenz einen vorbestimmten Schwellenwert überschreitet.

EP 1 040 564 B1 betrifft eine Windenergieanlage, die ohne Leistungsabgabe betrieben wird, wenn die Netzspannung vorbestimmte Werte über- oder unter-schreitet.

Ferner ist aus EP 1 164 691 B1 eine Windenergieanlage bekannt, bei der die Leistungsabgabe verringert wird, wenn die Netzspannung einen vorbestimmten Wert überschreitet.

Aus EP 1 467 463 A1 ist ein Windpark bekannt, der eine zentrale Steuereinheit besitzt. Die Steuereinheit kann abhängig von der auftretenden Netzfrequenz die Leistungsabgabe von einzelnen Windenergieanlagen aus dem Windpark steuern. Hierbei wird der von den einzelnen ausgewählten Windenergieanlagen erzeugte Strom oder die Spannung im Netzverbindungspunkt geregelt.

Aus US 5,886,417 ist ein System zur Erzeugung von elektrischer Leistung in einer Vielzahl von Generator-/Motoreinheiten bekannt. Ein Steuersystem ist ausgelegt, um für die unterschiedlichen Generator-/Motoreinheiten Querströme und Resonanzen zu unterdrücken. Zu dem bekannten System gehört auch ein Wasserpumpkraftwerk, bei dem Wasser in ein höher gelegenes Reservoir gepumpt werden kann, wenn ein Überfluss an elektrischer Leistung vorliegt. Tritt nachfolgend ein Mangel an elektrischer Leistung auf, so wird mit dem Wasser aus dem Wasserreservoir ein Generator zur Erzeugung von elektrischer Leistung angetrieben.

Der Erfindung liegt die technische Aufgabe zugrunde, eine Windenergieanlage oder einen Park von Windenergieanlagen bereitzustellen, die einen Beitrag zur Stabilisierung des Netzes liefert.

Erfindungsgemäß wird die Aufgabe durch eine Windenergieanlage mit den Merkmalen aus Anspruch 1 gelöst. Vorteilhafte Ausgestaltungen bilden die Gegenstände der Unteransprüche.

Das erfindungsgemäße Verfahren betrifft eine Windenergieanlage mit einem Generator, der zum Einspeisen von elektrischer Leistung an das elektrische Netz angeschlossen ist.

Der Anschluß kann hierbei unmittelbar durch den Netzanschluß einer freistehenden Windenergieanlage erfolgen oder auch mittelbar als eine in einem Windpark vorgesehene Windenergieanlage. Die erfindungsgemäße Windenergieanlage, ob nun in einen Windenergiepark integriert oder alleinstehend, besitzt eine Steuereinheit, die während des generatorischen Betriebs auf ein erstes Umschaltsignal ansprechend in einen motorischen Betrieb für den Generator der Windenergieanlage umschaltet.

Bei dem erfindungsgemäßen Verfahren wird auf das erste Umschaltsignal hin die Windenergieanlage als Verbraucher in das Netz geschaltet.

Der so erfindungsgemäß zugeschaltete Verbraucher kann einen Teil der überschüssigen Leistung aus dem Netz aufnehmen und einen zu starken Spannungs- und/oder Frequenzanstieg in dem Netz kompensieren. Im Gegensatz zu einer bloßen Leistungsabsenkung der in das Netz eingespeisten Leistung, wird beim erfindungsgemäßen Verfahren die Richtung des Leistungsflusses umgekehrt und Leistung aus dem Netz für den motorischen Betrieb verbraucht.

In einer bevorzugten Ausgestaltung erfolgt ein Umschalten in den motorischen Betrieb des Generators für eine vorbestimmte Maximaldauer. Die zeitliche Begrenzung verhindert, daß durch einen dauerhaften motorischen Betrieb Bauteile in der Windenergieanlage zu stark belastet werden.

Neben der zeitlichen Begrenzung der Dauer für den motorischen Betrieb ist die Betriebsführung der Windenergieanlage bevorzugt derart ausgelegt, daß die motorische aufgenommene Leistung einen Höchstbetrag nicht überschreitet. Zur Begrenzung der Leistungsaufnahme im motorischen Betrieb kann mindestens ein Rotorblatt um seine Längsachse verstellt werden. Diese Regelung wird als sogenannte Pitchregelung bezeichnet und beeinflußt im generatorischen Betrieb das an dem Rotor angreifende Drehmoment. Im motorischen Betrieb drehen sich die Verhältnisse um, so daß durch die Pitchregelung der Widerstand, der für die motorische Drehung des Rotors an dem Motor anliegt, eingestellt werden kann. Über den Widerstand ergibt sich auch die aus dem Netz aufgenommene Leistung der Windenergieanlage.

In einer möglichen Ausgestaltung wird während des Betriebs, insbesondere des generatorischen Betriebs der Windenergieanlage, die im Netz anliegende Spannung und/oder Frequenz gemessen. Bei Überschreiten eines vorbestimmten Werts für die Netzspannung und/oder für die Netzfrequenz schaltet die Steuereinheit in den motorischen Betrieb um.

In einer alternativen Ausgestaltung wird das Umschaltsignal in einer zentralen Überwachungseinheit für das Netz generiert und an die Steuereinheit der Windenergieanlage weitergeleitet. Die Überwachungseinheit kann beispielsweise eine Netzüberwachungsstation des Energieversorgungsunternehmens sein, die räumlich beabstandet von der Windenergieanlage den Betrieb des Netzes überwacht. Auch ist es denkbar, ein entfernt in einer Überwachungseinheit generiertes erstes Umschaltsignal und ein lokales erstes Umschaltsignal miteinander zu kombinieren und an der Windenergieanlage beispielsweise eine Plausibilitätsüberprüfung des empfangenen Signals der zentralen Überwachungseinheit vorzunehmen.

Im motorischen Betrieb wird zur Vermeidung von Überlasten an der Windenergieanlage die Drehzahl abhängig von der Windgeschwindigkeit geregelt.

Um in den generatorischen Betrieb zurückzuschalten, ist bevorzugt ein zweites Umschaltsignal definiert, das anhand von Ist-Werten für Strom- und Frequenzmessung und/oder aufgrund eines Vorgangs in der entfernt liegenden Überwachungseinheit in den generatorischen Betrieb zurückschaltet. Auch andere Gründe für das Zurückschalten können vorliegen. Erstes und zweites Umschaltsignal können identisch sein.

Die erfindungsgemäße Aufgabe wird ebenfalls durch eine Windenergieanlage mit einer Steuereinheit zur Durchführung des erfindungsgemäßen Verfahrens gelöst. Auch ein Windpark mit mindestens einer erfindungsgemäß gesteuerten Windenergieanlage löst die der Erfindung zugrundeliegende technische Aufgabe.

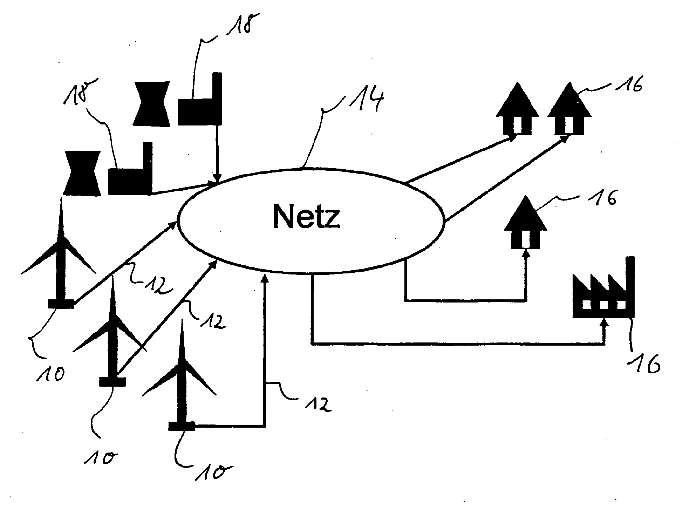

Die Erfindung wird nachfolgend anhand von einem Beispiel näher erläutert. Die einzige Figur zeigt Windenergieanlagen 10, die über Leitungen 12 elektrische Leistung in ein Netz 14 einspeisen. Bei der elektrischen Leistung kann es sich um Wirkleistung und Blindleistung mit unterschiedlichen Anteilen handeln, wobei auch ausschließlich einer der Anteile eingespeist werden kann. Das elektrische Netz 14 besitzt Verbraucher 16 und Kraftwerke 18, die schematisch dargestellt sind. Die Kraftwerke 18 speisen, ebenso wie generatorisch betriebene Windenergieanlagen 10, Leistung in das Netz ein. Die Verbraucher entnehmen dem Netz bereitgestellte Leistung.

Kommt es beispielsweise zur Beschädigung eines Kabelabschnitts, so kann es passieren, dass ein Teil der an das Netz angeschlossenen Verbraucher schlagartig ausfällt. Hierdurch ist die in das Netz eingespeiste Leistung zu hoch, wodurch Netzspannung und Netzfrequenz ansteigen. Ein solcher Ausfall kann beispielsweise durch den Ausfall eines Kabels ausgelöst werden, wenn das Kabel einen großen Verbraucher oder eine Vielzahl von Verbrauchern mit dem Netz verbindet.

Energieversorgungsunternehmen, als Betreiber der Netze, verfügen über Überwachungszentren, die den Zustand des Netzes aufgrund von Meßwerten beobachten. Auch können Leistungsströme von dem Überwachungszentrum gesteuert werden. In der Überwachungszentrale wird ein Umschaltsignal für eine oder mehrere Windenergieanlagen 10 generiert, wenn aufgrund der gemessenen Daten beobachtet wird, daß die Netzspannung und/oder Netzfrequenz ansteigt. Basierend auf dem Umschaltsignal schaltet dann jede angesteuerte Windenergieanlage in den motorischen Betrieb um und wird somit zu einem Verbraucher im Netz.

Die auftretende Überspannung kann so durch die Windenergieanlage(n) mindestens teilweise verbraucht werden. Das Netz wird durch diese Maßnahmen stabilisiert. Insbesondere kann so auch das Abschalten eines oder mehrerer Kraftwerke und damit ein großflächiger Ausfall des Stromnetzes vermieden werden.

## Patentansprüche

1. Verfahren zum Betreiben einer Windenergieanlage (10) mit einem Generator, der zum Einspeisen von elektrischer Leistung an ein elektrisches Netz (14) angeschlossen ist, wobei eine Steuereinheit vorgesehen ist, **dadurch gekennzeichnet, dass** die Steuereinheit während des generatorischen Betriebs auf ein erstes Umschaltsignal ansprechend den Generator in einen motorischen Betrieb umschaltet, wobei Leistung aus dem Netz (14) für den motorischen Betrieb verbraucht wird.

2. Verfahren nach Anspruch 1, **dadurch gekennzeichnet, daß** die Steuereinheit für eine vorbestimmte Maximaldauer in den motorischen Betrieb umschaltet.

3. Verfahren nach Anspruch 1 oder 2, **dadurch gekennzeichnet, daß** in dem motorischen Betrieb eine Betriebsführung der Windenergieanlage (10) derart erfolgt, daß die motorisch aufgenommene Leistung einen Höchstbetrag nicht überschreitet.

4. Verfahren nach Anspruch 3, **dadurch gekennzeichnet, daß** zur Begrenzung der Leistungsaufnahme im motorischen Betrieb mindestens ein Rotorblatt um seine Längsachse verstellt wird.

5. Verfahren nach einem der Ansprüche 1 bis 4, **dadurch gekennzeichnet, daß** während des Betriebs die im Netz (14) herrschende Spannung und/oder Frequenz gemessen wird.

6. Verfahren nach Anspruch 5, **dadurch gekennzeichnet, daß** bei Über-schreiten eines vorbestimmten Werts für die Netzspannung und/oder Netzfrequenz die Steuereinheit das erste Umschaltsignal zum Umschalten in den motorischen Betrieb erzeugt.

7. Verfahren nach einem der Ansprüche 1 bis 6, **dadurch gekennzeichnet, daß** das erste Umschaltsignal in einer entfernt liegenden Überwachungseinheit generiert und an die Steuereinheit der Windenergieanlage (10) weitergeleitet wird.

8. Verfahren nach einem der Ansprüche 1 bis 7, **dadurch gekennzeichnet, daß** im motorischen Betrieb eine Regelung der Drehzahl abhängig von der Windstärke erfolgt.

9. Verfahren nach einem der Ansprüche 1 bis 8, **dadurch gekennzeichnet, dass** die Steuereinheit vorgesehen ist, die während des motorischen Betriebs auf ein zweites Umschaltsignal ansprechend in den generatorischen Betrieb schaltet.

10. Verfahren nach Anspruch 9, **dadurch gekennzeichnet, dass** die Steuereinheit das zweite Umschaltsignal zum Umschalten in den generatorischen Betrieb erzeugt, wenn ein vorbestimmter Wert der Netzspannung und/oder Netzfrequenz unterschritten wird.

11. Verfahren nach Anspruch 9 oder 10, **dadurch gekennzeichnet, dass** das Umschaltsignal zum Umschalten in den generatorischen Betrieb in der entfernt liegenden Überwachungseinheit generiert und an die Steuereinheit der Windenergieanlage (10) weitergeleitet wird.

12. Windenergieanlage (10) mit einem Generator, der zum Einspeisen von elektrischer Leistung in ein elektrisches Netz (14) ausgebildet ist, wobei eine Steuereinheit vorgesehen ist, **dadurch gekennzeichnet, dass** die Steuereinheit auf ein erstes Umschaltsignal ansprechend aus einem generatorischen Betrieb in einen motorischen Betrieb umschaltet, wobei Leistung aus dem Netz (14) für den motorischen Betrieb verbraucht wird.

13. Windenergieanlage (10) nach Anspruch 12, **dadurch gekennzeichnet, dass** die Steuereinheit auf ein zweites Umschaltsignal ansprechend aus dem motorischen Betrieb in den generatorischen Betrieb umschaltet.

14. Windpark mit mehreren Windenergieanlagen (10), von denen mindestens eine eine Steuereinheit aufweist, die auf ein erstes Umschaltsignal ansprechend aus dem generatorischen Betrieb in den motorischen Betrieb umschaltet.

15. Windpark nach Anspruch 14, **dadurch gekennzeichnet, dass** die Steuereinheit auf ein zweites Umschaltsignal ansprechend aus dem motorischen Betrieb in den generatorischen Betrieb umschaltet.

## Claims

1. A method of operating a wind energy plant with a generator (10), which is connected to an electric grid (14) in order to supply electric power, wherein a control unit is provided, **characterised in that** during the operation as a generator, the control unit switches over the generator to an operation as a motor in response to a first switching signal, power from the grid (14) being consumed for the operation as a motor.

2. A method according to claim 1, **characterised in that** the control unit switches over to the operation as a motor for a predetermined maximum duration.

3. A method according to claim 1 or 2, **characterised in that** in the operation as a motor, an operation management of the wind energy plant (10) takes place such that the power absorbed as a motor does not exceed a maximum amount.

4. A method according to claim 3, **characterised in that** at least one rotor blade is adjusted around its longitudinal axis in order to limit the power draw in the operation as a motor.

5. A method according to any one of claims 1 to 4, **characterised in that** the voltage and/or frequency present in the grid (14) is measured during the operation.

6. A method according to claim 5, **characterised in that** the control unit generates the first switching signal for switching over to the operation as a motor when a predetermined value for the grid voltage and/or grid frequency is exceeded.

7. A method according to any one of claims 1 to 6, **characterised in that** the first switching signal is generated in a remotely situated monitoring unit and forwarded to the control unit of the wind energy plant (10).

8. A method according to any one of claims 1 to 7, **characterised in that** there is a regulation of the rotational speed depending on the wind velocity in the operation as a motor.

9. A method according to any one of claims 1 to 8, **characterised in that** the control unit is provided which, during the operation as a motor, switches over to an operation as a generator in response to a second switching signal.

10. A method according to claim 9, **characterised in that** the control unit generates the second switching signal for switching over to the operation as a generator when it is fallen below a predetermined value for the grid voltage and/or grid frequency

11. A method according to claim 9 or 10, **characterised in that** the switching signal for switching over to the operation as a generator is generated in the remotely situated monitoring unit and forwarded to the control unit of the wind energy plant (10).

12. A wind energy plant (10) with a generator that is adapted for feeding electric power into an electric grid (14), wherein a control is unit is provided, **characterised in that** the control unit switches over from an operation as a generator to an operation as a motor in response to a first switching signal, power from the grid (14) being consumed for the operation as a motor.

13. A wind energy plant (10) according to claim 12, **characterised in that** the control unit switches over from the operation as a motor to the operation as a generator in response to a second switching signal.

14. A wind farm with plural wind energy plants (10), from which at least one features a control unit, which switches over from the operation as a generator to the operation as a motor in response to a first switching signal.

15. A wind farm according to claim 14, **characterised in that** the control unit switches over from the operation as a motor to the operation as a generator in response to a second switching signal.

## Revendications

1. Procédé de commande d'une centrale éolienne avec un générateur (10), qui est relié à un réseau électrique (14) afin de l'alimenter avec de l'énergie électrique, une unité de commande étant pourvue, **caractérisé en ce que** pendant le fonctionnement comme un générateur, l'unité de commande commute le générateur à un fonctionnement comme un moteur en réponse à un premier signal de commutation, de l'énergie provenant du réseau (14) étant consommée pour le fonctionnement comme un moteur.

2. Procédé selon la revendication 1, **caractérisé en ce que** l'unité de commande commute au fonctionnement comme un moteur pour une durée maximale prédéterminée.

3. Procédé selon la revendication 1 ou 2, **caractérisé en ce que** dans le fonctionnement comme un moteur, une gestion de fonctionnement de la centrale éolienne (10) prend place de sorte que l'énergie absorbée comme un moteur ne dépasse pas un montant maximal.

4. Procédé selon la revendication 3, **caractérisé en ce que** au moins une pale de rotor est ajustée autour de son axe longitudinal afin de limiter la consommation d'énergie dans le fonctionnement comme un moteur.

5. Procédé selon l'une quelconque des revendications 1 à 4, **caractérisé en ce que** la tension électrique et/ou la fréquence présente dans le réseau (14) est mesurée pendant le fonctionnement.

6. Procédé selon la revendication 5, **caractérisé en ce que** l'unité de commande génère le premier signal de commutation pour commuter au fonctionnement comme un moteur quand une valeur prédéterminée pour la tension électrique du réseau et/ou la fréquence du réseau est dépassée.

7. Procédé selon l'une quelconque des revendications 1 à 6, **caractérisé en ce que** le premier signal de commutation est généré dans une unité de surveillance éloignée et transféré à l'unité de commande de la centrale éolienne (10).

8. Procédé selon l'une quelconque des revendications 1 à 7, **caractérisé en ce que** dans le fonctionnement comme un moteur, il y a une régulation de la vitesse de rotation en dépendance de la force du vent.

9. Procédé selon l'une quelconque des revendications 1 à 8, **caractérisé en ce que** l'unité de commande est pourvue qui commute à un fonctionnement comme un générateur en réponse à un deuxième signal de commutation pendant le fonctionnement comme un moteur.

10. Procédé selon la revendication 9, **caractérisé en ce que** l'unité de commande génère le deuxième signal de commutation pour commuter au fonctionnement comme un générateur quand une valeur prédéterminée pour la tension électrique du réseau et/ou la fréquence du réseau n'est pas atteinte.

11. Procédé selon la revendication 9 ou 10, **caractérisé en ce que** le signal de commutation pour commuter au fonctionnement comme un générateur est généré dans l'unité de surveillance éloignée et transféré à l'unité de commande de la centrale éolienne (10).

12. Centrale éolienne (10) avec un générateur qui est adapté pour l'alimentation d'un réseau électrique (14) avec de l'énergie électrique, une unité de commande étant pourvue, **caractérisé en ce que** l'unité de commande commute d'un fonctionnement comme un générateur à un fonctionnement comme un moteur en réponse à un premier signal de commutation, de l'énergie provenant du réseau (14) étant consommée pour le fonctionnement comme un moteur.

13. Centrale éolienne (10) selon la revendication 12, **caractérisée en ce que** l'unité de commande commute du fonctionnement comme un moteur au fonctionnement comme un générateur en réponse à un deuxième signal de commutation.

14. Parc éolien avec plusieurs centrales éoliennes (10), desquels au moins une présente une unité de commande, qui commute à partir du fonctionnement comme un générateur au fonctionnement comme un moteur en réponse à un premier signal de commutation.

15. Parc éolien selon la revendication 14, **caractérisé en ce que** l'unité de commande commute à partir du fonctionnement comme un moteur au fonctionnement comme un générateur en réponse à un deuxième signal de commutation.
